# EUROPÄISCHE PATENTSCHRIFT

(11) **EP 1 941 142 B1**
(45) Veröffentlichungstag und Bekanntmachung des Hinweises auf die Patenterteilung: **24.03.2010**
(21) Anmeldenummer: 06806591.1
(22) Anmeldetag: 27.10.2006
(51) Int. Cl.: F02D 19/06, F02M 37/00, F02M 31/16, F02M 55/02

(54) **RAPS-/DIESELVENTIL**
RAPE/DIESEL VALVE
SOUPAPE COLZA/DIESEL

(30) Priorität: 28.10.2005 DE 102005051743; 02.01.2006 DE 102006000621
(43) Veröffentlichungstag der Anmeldung: 09.07.2008
(73) Patentinhaber: Dirnhofer, Rainer, 92272 Freudenberg (DE)
(72) Erfinder: Dirnhofer, Rainer, 92272 Freudenberg (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2006/010380
(87) Internationale Veröffentlichungsnummer: WO 2007/048633

(56) Entgegenhaltungen:
- EP-A- 1 647 699
- EP-A2- 1 462 636
- DE-A1- 3 800 585
- DE-A1- 3 929 115
- DE-A1- 4 418 856
- DE-A1- 4 433 500
- DE-A1- 10 060 573
- DE-A1- 10 154 455
- DE-A1- 19 635 220
- DE-B- 1 203 046
- US-A- 2 984 229

## Beschreibung

Die Erfindung betrifft eine Kraftstoffversorgungsanlage für einen Verbrennungsmotor, der wahlweise mit unterschiedlichen Kraftstoffen betreibbar ist. Kraftstoff 1 ist der vom Hersteller vorgesehene Kraftstoff, beispielsweise Diesel, für den das Fahrzeug konstruiert wurde. Kraftstoff 2 ist ein alternativer Kraftstoff (zumeist Pflanzenöl), der bedingt durch seine physikalischen und chemischen Eigenschaften nur dann problemlos zum Einsatz kommen kann, wenn man bestimmte Betriebszustände mit Kraftstoff 1 abdeckt.

Insbesondere betrifft die Erfindung eine Kraftstoffversorgungsanlage mit einer Ventilvorrichtung zum Umschalten zwischen herkömmlichem Dieselkraftstoff und aus nachwachsenden Rohstoffen erzeugtem Kraftstoff wie Rapsöl oder anderen pflanzlichen Ölen.

Im Stand der Technik sind Vorrichtungen bekannt, um einen Motor mit unterschiedlichen Kraftstoffen, zum Beispiel Diesel und Rapsöl, zu betreiben. Würde ein herkömmlicher Selbstzündermotor nur mit Rapsöl betrieben, träte unter anderem das Problem auf, dass Rapsöl erst bei höheren Temperaturen dünnflüssig genug ist, um in einem solchen Motor in den Brennraum gefördert zu werden, weiterhin ist das Einspritzsystem herkömmlicher Dieselmotoren nicht für zähflüssigen Kraftstoff konzipiert. Zudem gelangt, wenn der Motor kalt ist, mehr Treibstoff in das Motoröl, weil die Spaltmaße von Kolbenringen noch nicht perfekt passen. Pflanzenöl verdampft dann aber - im Gegensatz zu Diesel - nicht mehr, so dass das Motoröl beeinträchtigt werden kann. Bei kalten Kolbenaußenwänden ist die Verbrennung schlechter. Es könnten sich bedingt durch Pflanzenöl vermehrt Ablagerungen bilden.

Erst bei einer Kraftstofftemperatur von mindestens ungefähr 60°C sind die Fließ- und Verbrennungseigenschaften von Rapsöl als einem Beispiel für pflanzliche Kraftstoffe mit denen von Diesel vergleichbar. Daher werden herkömmliche Rapsölmotoren beim Starten mit Diesel aus einem ersten Tank betrieben, bis sie warmgelaufen sind. Gleichzeitig wird mit der Abwärme der Motoren über einen Wärmetauscher ein zweiter Tank, der Rapsöl enthält, sowie die Zuführleitungen vom zweiten Tank zum Motor aufgewärmt, beispielsweise indem das Kühlwasser vom Motor den Tank und die Zuführleitungen aufheizt. Sobald die Temperatur des Rapsöls hoch genug ist, beispielsweise bei ungefähr 60°C liegt, wird die Versorgung des Motors mit Diesel gestoppt und der Motor stattdessen mit Rapsöl versorgt. Diese Umschaltung von Diesel auf Rapsöl kann von Hand vorgenommen werden, indem ein entsprechendes Ventil in der Zuführung umgelegt wird. In modernen Anlagen wird die Umschaltung automatisch durchgeführt, sobald der pflanzliche Kraftstoff aufgeheizt ist.

Neben der Fließfähigkeit ändern sich beispielsweise auch die Verbrennungseigenschaften abhängig von der Betriebstemperatur des pflanzlichen Kraftstoffes. Daher reicht es nicht aus, lediglich den Kraftstoff vorzuheizen, sondern der Motor muss zunächst mit dem Kraftstoff auf Betriebstemperatur gebracht werden, für den er ursprünglich ausgelegt wurde. Dann sind alle Bestandteile auf ideale und materialschonende Betriebsbereitschaft gebracht, und das Umschalten kann erfolgen, ohne dem Motor oder anderen Bauteilen Schaden zuzufügen.

In Fahrzeugen mit derartigen für wechselnde Kraftstoffe vorgesehenen Motoren, wie beispielsweise in der DE 38 00585 A1 oder der DE 101 54 455 A1 beschrieben, werden die Kraftstoffe über getrennte Zuleitungen möglichst bis an das Einspritzsystem herangeführt. Dadurch wird eine Vermischung der Kraftstoffe weitgehend vermieden. Lediglich die Einspritzpumpe selbst und eine sehr kurze gemeinsame Zuführung zu der Pumpe muss von beiden Kraftstoffen genutzt werden. Beim Abschalten des Motors wird diese gemeinsame Zuführung wieder mit Dieselkraftstoff gespült bzw. gefüllt, um sicherzustellen, dass beim nächsten Kaltstart kein zähflüssiges Rapsöl in diesem Bereich den Durchfluss von Diesel behindert.

Speziell nach der DE 101 54 455 A1, die als nächstkommender Stand der Technik angesehen wird, gegen die der Anspruch 1 der Erfindung abgegrenzt ist, wird versucht, beide Kraftstoffe möglichst weitgehend in separaten Leitungen bis zu den Einspritzdüsen zu führen. Dies soll so weit gehen, dass für jeden Kraftstoff ein Einspritzsystem inklusive Einspritzdüse pro Zylinder vorgesehen ist, um jederzeit ohne Probleme zwischen den Kraftstoffen umschalten zu können und so das Spülen der Motoren mit Diesel nach dem eigentlichen Abschalten zu unterbinden.

Falls wie üblicherweise nur ein Einspritzsystem pro Zylinder vorhanden ist, werden die Kraftstoffe über getrennte Leitungen zu einem oder mehreren Umschaltventilen zugeführt. Von den Umschaltventilen führt eine (kurze) gemeinsame Leitung zu dem Einspritzsystem je Zylinder, wie oben beschrieben. Daher müssen für jeden Motoraufbau die Ventilanordnung, Kraftstoffleitungen und eventuelle Steuerleitungen für die automatische Umstellung der Ventile angepasst und eingebaut werden; idealerweise werden sogar zwei Einspritzsysteme pro Zylinder vorgesehen. Dies führt zu weitgehender Neukonzeption des Motors oder zumindest zu hohem Umbauaufwand. Zudem ist von Nachteil, dass derartige Systeme in der Regel mit flexiblen Schläuchen aufgebaut sind, die mehrere Zwischenstücke erforderlich machen, die - zumindest bei automatisierter Montage - aufwändig zu montieren und abzudichten sind.

Die US-A-2 984 229 zeigt ein System zur Versorgung eines Motors alternativ mit zwei Kraftstoffen, einem Schweröl und einem Leichtöl. Eine Pumpe lässt das Leichtöl ständig durch das System zirkulieren, wenn der Motor läuft. So lange der Motor kalt ist, wird er mit diesem Leichtöl versorgt. Schweröl wird inzwischen in einem Kreislauf geführt und durch eine Heizung aufgewärmt. Ein relativ komplexes System mit einem Mehrkammerkolben kann veranlassen, dass vom Leichtöl auf das Schweröl umgeschaltet wird.

Die DE 196 35 220 A1 offenbart einen innenbeheizten Fettfilter für Mehrstoffmotoren. Über einen Unterdruckschalter wird nach dieser Lehre festgestellt, ob fließfähiges Fett an die Einspritzpumpe abgegeben werden kann. Falls nicht, wird ein Magnetventil für die Zuführung des dünnflüssigen Startkraftstoffs geöffnet, bis das Fett durch Erwärmung fließfähig ist und somit in die Einspritzdüsen gefördert werden kann.

Die DE 39 29 115 A1 lehrt eine Vorrichtung zum Betreiben von Dieselbrennkraftmaschinen, die insbesondere mit schwer zündfähigen, höher viskosen und/oder schwer verdampfbaren Ölen und/oder alternativ mit Diesel betrieben werden. Diese Druckschrift lehrt eine spezielle Anordnung der Kraftstoffleitungen, um das Spülen vor dem Abschalten der Brennkraftmaschine zu vereinfachen

Die EP-A2-1 462 636 beschreibt ebenfalls eine Zuführung von Diesel oder Heizöl an einen Motor. Dabei soll eine fiskalische Besonderheit in Frankreich ausgenutzt werden, nämlich dass der Betrieb von Fahrzeugen im Stand mit Heizöl anstelle von Diesel zulässig ist. Da keine wesentlichen chemischen Unterschiede bestehen, ist nach dieser Druckschrift keine gesonderte Behandlung von Heizöl und Diesel vorgesehen.

Daher ist es eine Aufgabe der vorliegenden Erfindung, eine Kraftstoffversorgungsanlage zu schaffen, die mindestens zwei verschiedene Kraftstoffe sicher zuführt und hilft, Leckageverluste zu vermeiden. Zudem soll der Montageaufwand deutlich reduziert werden.

Erfindungsgemäß wird diese Aufgabe dadurch gelöst, dass ein Ventilsteuerblock vorgesehen wird, in den Kraftstoffzuleitungen von den Tanks münden und der die Kraftstoffe über weitere Leitungen an die Einspritzdüsen verteilt. Alle Ventile zum Umschalten zwischen den zwei Kraftstoffen, beispielsweise von Diesel- auf Pflanzenölbetrieb, sind in diesen Block integriert.

Dadurch wird die Anzahl der Übergänge und Schlauchanschlüsse für die Kraftstoffe deutlich reduziert, so dass die Leckagegefahr durch Risse in Schläuchen und undichte Übergänge deutlich reduziert ist.

Besonders bevorzugt wird der Ventilsteuerblock mit einer Steuerung kombiniert. Diese Steuerung kann dann die Kraftstoffversorgung automatisch steuern, wie nachstehend noch genauer erläutert wird. Wenn alle Ventile zur Umschaltung zwischen den Kraftstoffen in dem stabilen Ventilsteuerblock integriert sind, kann die Steuerung über mehr oder weniger fest verlegte Leitungen die Ventile ansteuern. Besonders bevorzugt sind auch die wesentlichen Elemente der Steuerung wie eine programmierbare Recheneinheit mit Speichereinheiten mit dem Ventilsteuerblock verbunden. Diese Recheneinheit kann in der Fahrgastzelle angeordnet bzw. mit Ein- und Ausgabeeinheiten in der Fahrgastzelle verbunden sein. Hier können dem Fahrzeugführer eventuell relevante Daten angezeigt werden, beispielsweise, mit welchem Kraftstoff er gerade fährt, die Kraftstofftemperatur, die bisherige Fahrtdauer mit diesem Kraftstoff usw. Dadurch erhält man eine sehr kompakte und sehr zuverlässige Steuerung, bei der zudem die gesamte Verdrahtung zwischen der Steuereinheit und den Ventilen in einem einzigen Kabelbaum geführt werden kann, was ebenfalls zur Montagefreundlichkeit beiträgt.

Nach einer weiter bevorzugten Ausführungsform wird der Ventilsteuerblock aus wärmeleitendem Material, beispielsweise aus Metall, hergestellt.

Durch den Ventilsteuerblock fließen, wie vorstehend erläutert, beide Kraftstoffe. Wenn der Ventilsteuerblock möglichst nahe am Motor angebracht wird, kann die Abwärme des Motors den Block aufheizen. Wenn dieser die Wärme gut leitet, heizt er folglich auch den darin befindlichen Kraftstoff auf. Dadurch wird das Aufheizen beschleunigt und es kann schneller auf den weniger fließfähigen Kraftstoff umgeschaltet werden. Ferner kann der weniger fließfähige Kraftstoff mit einer geringeren Temperatur bis zum Ventilsteuerblock gefördert werden. Dies ist möglich, weil die Zuleitungen vor dem Ventilsteuerblock größere Querschnitte aufweisen als die Zuleitungen zu den Zylindern und insbesondere in den Einspritzdüsen nach dem Steuerblock, so dass eine Verstopfung weniger wahrscheinlich ist als in den Zuleitungen zu den Zylindern und zudem diese Zuleitungen bereits beim Umrüsten auf den zweiten Kraftstoff entsprechend ausgelegt werden können.

Nach einer weiter bevorzugten Ausführungsform ist der Ventilsteuerblock möglichst nahe bei einem Wärmetauscher angeordnet, der die Aufgabe hat, den weniger fließfähigen Kraftstoff zu erwärmen.

Standardmäßig werden in Motoren zur Verbrennung weniger fließfähiger nachwachsender Rohstoffe Wärmetauscher eingebaut, die über das Kühlwasser des Motors den Tank mit dem weniger fließfähigen Stoff vorwärmen.

Bei der vorteilhaften Ausführungsform der Erfindung findet dieses Vorwärmen direkt an dem Ventilsteuerblock und daher teilweise auch mit dessen Abwärme statt. Da der Block bereits nach kurzer Betriebszeit aufgewärmt ist, verkürzt sich die Aufwärmzeit für den Kraftstoff weiter und es kann schneller auf den weniger fließfähigen Kraftstoff umgeschaltet werden.

Nach einer weiter bevorzugten Ausführungsform weist die Kraftstoffversorgungsanlage mindestens einen Temperatursensor auf.

Wenn eine Steuerung vorhanden ist, kann diese nach einer vorab festgelegten Zeit des Warmfahrens vom Dieselin den Rapsölbetrieb-umschalten. Allerdings muss dann diese Zeit so lange bemessen sein, dass das Rapsöl auch unter ungünstigsten Bedingungen (z.B. im Sinter) aufgewärmt ist. Wird dagegen die Temperatur des Kraftstoffes gemessen, kann bei günstigen Bedingungen früher und bei ungünstigen Bedingungen später umgeschaltet werden, so dass möglichst wenig Dieselkraftstoff benötigt wird. Darüber hinaus wird die Temperatur des zweiten Kraftstoffs dann ideal ermittelt, wenn sie nicht direkt im Tank, sondern erst in den Zuführleitungen, möglichst kurz vor dem Ventilsteuerblock, geprüft wird. Sobald die Prüfung ergibt, dass die Kraftstoff- (und ebenso die Motor-) Temperatur die gewünschte Temperatur erreicht hat, kann umgeschaltet werden. Dadurch reduziert man (in Verbindung mit den anderen genannten Maßnahmen wie kurzen Wegen etc. die Betriebszeit mit dem ersten Kraftstoff. Dies trägt zur schnelleren Amortisation der Anlage bei. Ist dagegen keine automatische Steuerung vorhanden, kann dem Fahrer über den Temperatursensor signalisiert werden, dass ein Umschalten möglich ist.

Noch weiter bevorzugt kann die Kraftstoffanlage automatisch in zwei Modi, nämlich einem Modus mit geschlossenem und einem Modus mit offenem Kreislauf mit Pflanzenöl betrieben werden.

Grundsätzlich werden Benzin- und Dieselmotoren herkömmlich in einem offenen Kreislauf betrieben, das heißt, Kraftstoff wird aus dem (drucklosen) Tank von einer Pumpe unter einem geringen Druck in einen Umlauf gefördert, aus dem der benötigte Kraftstoff entnommen wird. Der nicht benötigte Kraftstoff fließt wieder in den Tank zurück und führt dabei zusätzlich etwas Wärme aus dem Motor ab. Rapsölmotoren, die auf eine gute Erwärmung des Kraftstoffes angewiesen sind, werden dagegen herkömmlich in einem geschlossenen Kreislauf betrieben. Dabei zirkuliert das Pflanzenöl in einer Leitung im Motor, und nur das verbrauchte Öl wird von der Kraftstoffpumpe in diesen Kreislauf zugeführt. Dadurch erwärmt sich das Öl im Kreislauf sicher auf die benötigte Temperatur; das Pflanzenöl im Tank wird dagegen nur durch den Wärmetauscher erwärmt. Allerdings besteht bei dem geschlossenen Kreislauf die Gefahr, dass an undichten Stellen Luft in den Kreislauf gelangt, was zu Zündaussetzern und schließlich zum Liegenbleiben des Fahrzeugs führt. Durch Spülen des Kreislaufes muss in einem solchen Fall die Luft ersetzt werden.

Erfindungsgemäß wird der Motor beim Umschalten in den Pflanzenölbetrieb ebenfalls zunächst im geschlossenen Kreislauf betrieben. Aufgrund der vorstehend beschriebenen Effekte bezüglich Wärmeleitung, Kompaktheit und Integration wird jedoch erfindungsgemäß der Kraftstoff besser als im Stand der Technik erwärmt. Zudem wird die Temperatur des Kraftstoffs im Umlauf gemessen. Daher kann automatisch auf den offenen Umlauf umgeschaltet werden, wenn die Pflanzenöltemperatur ausreichend hoch, d.h. um einen Sicherheitsfaktor höher als der Wert für die Fahrt mit Öl im geschlossenen Umlauf ist. Dadurch wird das Öl im Tank erwärmt, und der (ebenfalls Leistung benötigende) Wärmetauscher kann eventuell abgestellt werden. Fällt die Öltemperatur durch diese Maßnahmen zu stark, wird (automatisch) im geschlossenen Kreislauf weitergefahren. Durch die Fahrt im offenen Kreislauf wird zuverlässig Luft aus dem System entfernt, so dass die Zuverlässigkeit höher wird.

Nach einer weiter bevorzugten Ausführungsform weist die Kraftstoffversorgungsanlage starre Kraftstoffleitungen zwischen dem Ventilsteuerblock und der Brennkraftmaschine auf, die noch weiter bevorzugt eng am Zylinderblock anliegend angeordnet sind.

Während im Stand der Technik kurze, flexible Leitungen zwischen den einzelnen Ventilen und den Zylindern sowie lange, flexible Leitungen von den Tanks zu den Zylindern verwendet werden, wird nach dieser bevorzugten Ausführungsform der Erfindung mit festen Rohren gearbeitet, die idealerweise am Motorblock oder am Zylinderkopf anliegen. Die festen, beispielsweise aus Metall gefertigten Rohre können die Wärme des Motors gut aufnehmen. Zudem sind sie eng am Motor anliegend gegen Fahrtwind und andere kühlende Einflüsse geschützt. Dadurch wird der Kraftstoff in den Rohren schnell erwärmt. Dies wurde im Stand der Technik bisher aus zwei Gründen nicht verwirklicht: Zum einen werden herkömmlich flexible Kunststoffschläuche verwendet, um bei einer Nachrüstung von Hand mehrere ähnliche Motoren umrüsten zu können, wobei die Automatisierbarkeit keine Rolle spielt, dafür aber mit ähnlichen Bauteilen unterschiedliche Abstände zwischen Teilen des Einspritzsystems realisiert werden können, und zum zweiten ist vor allem von Ottomotoren bekannt, dass der in zu heißen Zuleitungen befindliche Kraftstoff Gasblasen bildet, die die Versorgung des Motors behindern können. Diese Gefahr besteht jedoch bei den hier bevorzugt verwendeten Kraftstoffen Rapsöl und Diesel nicht, so dass eine effektive Aufheizung des Kraftstoffs möglich ist. Die festen Rohre sind bei automatisierter Montage, beispielsweise bei einem serienmäßigen Einbau, deutlich einfacher handhabbar und praktisch wartungsfrei, da die bei Schläuchen möglichen Leckstellen weitgehend vermieden werden.

Wie vorstehend beschrieben, arbeitet die erfindungsgemäße Kraftstoffversorgungsanlage idealerweise gemeinsam mit einer Steuervorrichtung.

Nach einer bevorzugten Ausführungsform übernimmt die Steuervorrichtung der Kraftstoffanlage den kompletten Betrieb zum Umschalten von einem Kraftstoff auf den anderen. Insbesondere veranlasst die Steuervorrichtung, dass die Kraftstoffleitungen beim Abstellen des Motors nach Betrieb mit dem weniger fließfähigen Kraftstoff mit dem fließfähigen Kraftstoff gespült werden, um sicherzustellen, dass der Motor beim darauffolgenden Kaltstart problemlos starten kann.

Nach einer weiter bevorzugten Ausführungsform kann das Spülen wie im Stand der Technik durch den Fahrer ausgelöst werden, der einen Wahlschalter in der Fahrerkabine betätigt.

Wenn der Fahrer beabsichtigt, demnächst eine längere Rast einzulegen, bei der der Motor abkühlt, kann er die Spülung rechtzeitig selbst auslösen. Dann können die Zuleitungen noch während der Fahrt gespült werden, so dass keine Nachlaufzeit des Motors zu diesem Zweck nötig ist. Dazu kann dem Fahrer ein einbauspezifischer Wert, wie lange Diesel durchgespült werden muss, mitgeteilt werden. Stellt der Fahrer das Fahrzeug ohne vorheriges (oder nach nicht ausreichendem) Spülen ab, sorgt die Steuerung dafür, dass der Motor weiterläuft, bis das System gespült ist und problemlos wieder starten kann.

Umgekehrt kann es auch zweckmäßig sein, wenn der Fahrer veranlassen kann, dass das Spülen beim Abstellen des Motors unterdrückt wird, wenn nur eine kurze Pause zu erwarten ist, beispielsweise an einem geschlossenen Bahnübergang. Daher kann der Fahrer nach einer weiter bevorzugten Ausführungsform der Kraftstoffversorgungsanlage über einen Wahlschalter das Spülen (zunächst) umgehen.

Nach einer noch weiter bevorzugten Ausführungsform überwacht dabei die Steuerung die Kraftstofftemperatur und führt das Spülen trotz der Unterdrückung selbständig durch, falls die Temperatur unter einen bestimmten Wert fällt, d.h. die Gefahr besteht, dass sich die Fließfähigkeit verschlechtert, so dass der Motor nicht mehr gestartet werden kann.

Vorteilhafte Weiterbildungen finden sich in weiteren Unteransprüchen.

Die Erfindung wird nachfolgend anhand eines Ausführungsbeispiels unter Bezugnahme auf die Zeichnung näher erläutert.

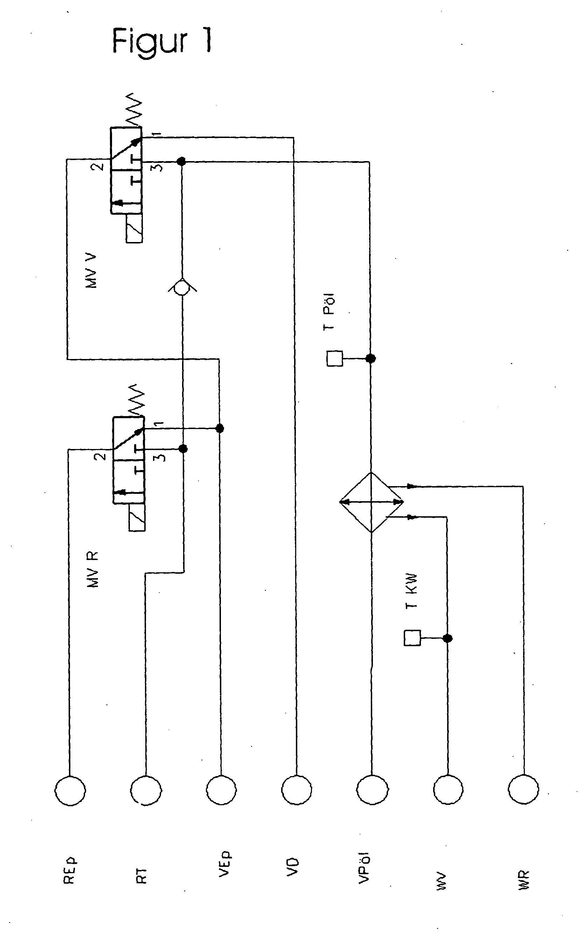

Fig. 1 zeigt einen Hydraulikschaltplan für das Ausführungsbeispiel der Erfindung.

Fig. 2 zeigt ein Ablaufdiagramm einer bevorzugten Ausführungsforms der erfindungsgemäßen Steuerung.

Die Figuren 3 bis 9 zeigen Ablaufpläne von Unterprogrammen des Hauptprogramms nach Fig. 2.

Als Ausführungsbeispiel wird, wie vorstehend erwähnt, ein Fahrzeug mit Dieselmotor verwendet, das zum Betrieb mit Rapsöl als Alternativkraftstoff umgerüstet wurde.

Beim Start des Fahrzeugs sind beide Ventile zunächst stromlos. Dadurch fließt Diesel vom Tankanschluss VD des Ventilsteuerblocks über die Anschlüsse 1 und 3 des MV V und den Anschluss VEp des Ventilsteuerblocks in Richtung des Einspritzsystems bzw. der Einspritzpumpe. Wie im Stand der Technik wird der Einspritzpumpe über diesen Vorlauf eine größere Menge an Diesel angeboten, als sie benötigt. Der überschüssige Dieselkraftstoff fließt aus dem Rücklauf des Einspritzsystems sowie die Anschlüsse 2 und 1 des MV R im sogenannten "geschlossenen Kreislauf" über den Anschluss REp des Ventilsteuerblocks.

Wenn der Motor betriebswarm ist, wird das MV V umgeschaltet (bestromt). Dadurch wird die Zufuhr von Dieselkraftstoff gestoppt und die Zufuhr von Rapsöl im "geschlossenen Kreislauf" (über die Anschlüsse 3 und 2 des MV V zu VEp, von dort zurück über REp und die Anschlüsse 2 und 1 des MV R) gestartet. Da das Rapsöl zu diesem Zeitpunkt in vorgewärmten Leitungen auf bereits warmen Dieselkraftstoff trifft, den es nach und nach ersetzt, erwärmt sich auch die vergleichsweise kleine Menge an Rapsöl bei stromlosem MV R im Vor- und Rücklauf des Einspritzsystems schnell in ausreichendem Maße. Das nicht verbrauchte Rapsöl zirkuliert weiter und kann daher das nachgeförderte Rapsöl, das das verbrannte Öl ersetzt, ebenfalls erwärmen. Damit steht während der Fahrt stets ausreichend warmes Rapsöl zur Verfügung.

Erhöht sich die Temperatur des Rapsöls im Ventilsteuerblock während der Fahrt weiter, kann das MV R umgeschaltet (bestromt) werden. Dann fließt das von dem Einspritzsystem nicht verbrauchte Rapsöl im "offenen Kreislauf" über die Anschlüsse 2 und 3 des MV R zurück in den Rapsöltank. Dadurch wird das im Tank befindliche Rapsöl schneller aufgeheizt als bei der alleinigen Heizung durch den Wärmetauscher. Zudem können Luftansammlungen, die durch Undichtigkeiten im vorstehend erörterten geschlossenen Kreislauf dazu führen können, dass Luft in den Zulauf zum Einspritzsystem gelangt, im offenen Kreislauf in den Tank zurückgegeben werden. Geschieht dies nicht, könnte es bei zu großen Luftblasen aufgrund einer Undichtigkeit im geschlossenen Kreislauf geschehen, dass das Einspritzsystem Luft statt Kraftstoff ansaugt und das Fahrzeug deshalb liegenbleibt.

Wenn erkannt wird, dass die Kraftstoffanlage gespült werden muss (weil der Fahrer den Motor abstellt oder einen entsprechenden Schalter der Steuerung betätigt, um anzuzeigen, dass der Motor demnächst abgestellt wird), wird das MV V stromlos geschaltet und Diesel fließt wie vorstehend beschrieben vom Anschluss 1 des MV V über den Anschluss 2 in den Umlauf zur Einspritzpumpe (Anschlüsse VEp und REp), um diesen zu spülen. Über die Anschlüsse 2 und 3 des noch bestromten MV R wird zudem der Rücklauf zum Rapstank (RT) mit Diesel gespült.

Das vorstehend erläuterte Grundprinzip kann je nach Auslegung des Motors modifiziert werden. Beispielsweise ist es möglich, das Rapsöl durch eine (nicht gezeigte) elektrische Hilfspumpe zirkulieren zu lassen, bevor das Fahrzeug startet, beispielsweise um es mittels einer (ebenfalls nicht gezeigten) Heizwendel aufzuwärmen. In diesem Fall wird das Rapsöl vom Anschluss VPöl durch den Ventilsteuerblock über das gezeigte Rückschlagventil zum Anschluss RT gepumpt, ohne in den Umlauf des Einspritzsystems zu gelangen, während der Umlauf mit Diesel gespült wird (beide MV stromlos).

Falls eine solche Maßnahme bei einem gegebenen Motor nicht notwendig erscheint (weil z.Bsp. der zweite Kraftstoff im Steuerblock ausreichend erwärmt wird), kann die Leitung über das Rückschlagventil deaktiviert bleiben bzw. einfach weggelassen werden.

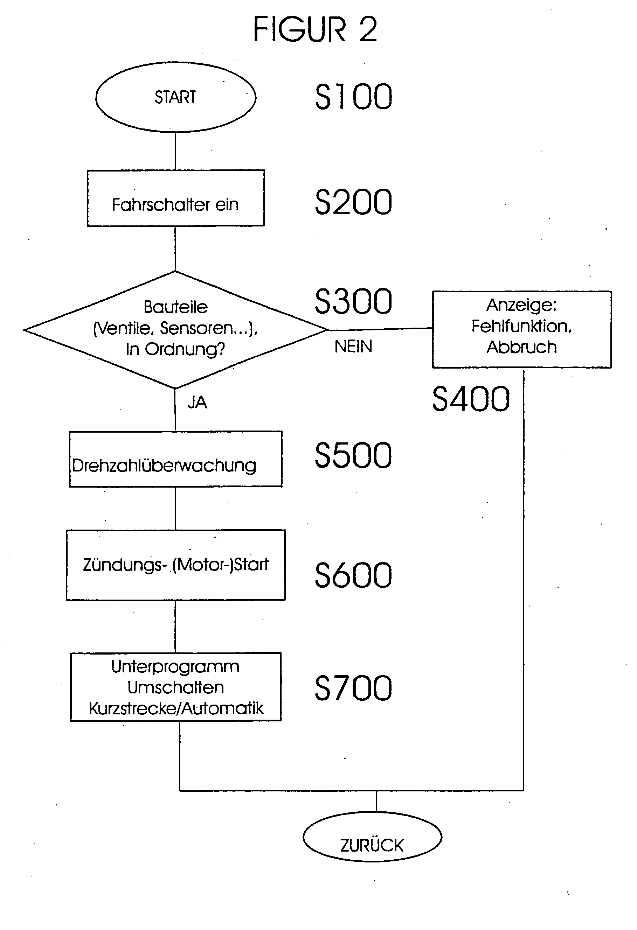

Im folgenden werden mögliche Steuerungsprogramme für den vorstehend erläuterten Ventilsteuerblock anhand der Figuren 2 bis 7 erörtert.

Figur 2 zeigt den allgemeinen Ablauf der Motorüberwachung. Sobald der Fahrschalter eingeschaltet ist (S200), wird zunächst (S300) geprüft, ob alle Bauteile der Kraftstoffversorgung normal arbeiten. Falls nicht, wird dem Fahrer im Schritt S400 eine Fehlfunktion gemeldet, beispielsweise über ein Display, eine Warnlampe und/oder ein akustisches Signal und das Programm geht wieder an den Anfang zurück.

Falls zunächst keine Fehlfunktion festgestellt wird, wird in Schritt S500 ein (nicht gezeigtes) Programm zur Drehzahlüberwachung gestartet. Dieses Programm prüft während einer vorab festgelegten Zeit, ob die Motordrehzahl über einen festgelegten Wert steigt, d.h. ob der Motor innerhalb dieser Zeit gestartet wird. Falls nicht, geht die Steuerung zum Schritt S400, um einen Fehler zu melden, und anschließend wieder wie vorstehend beschrieben zurück.

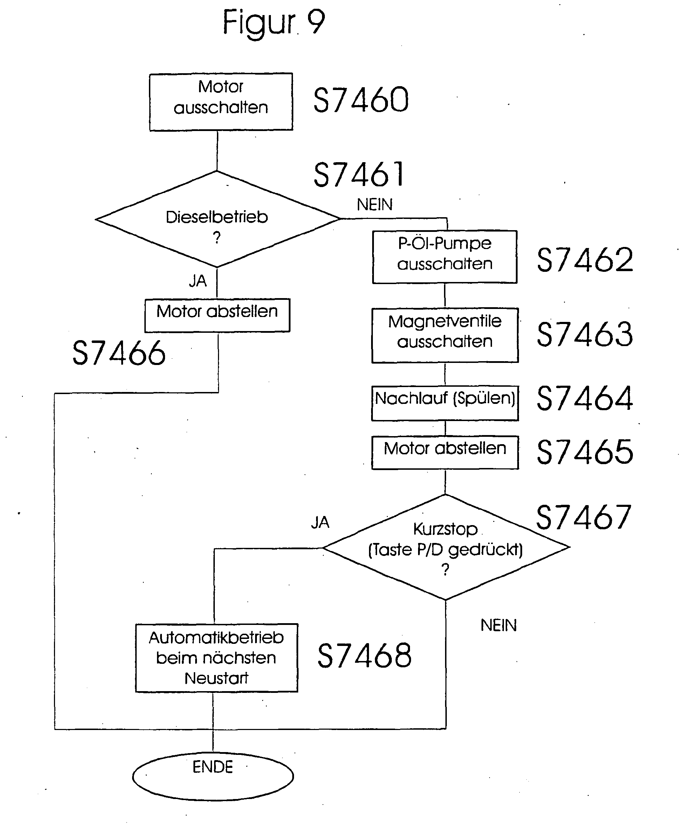

Anschließend wird der Motor im Schritt S600 auf herkömmliche Weise gestartet. Wie aus der nachfolgenden Beschreibung der Steuerung, insbesondere der Fig. 9, noch klar wird, startet der Motor stets mit Dieselkraftstoff, d.h. beide Magnetventile sind ausgeschaltet.

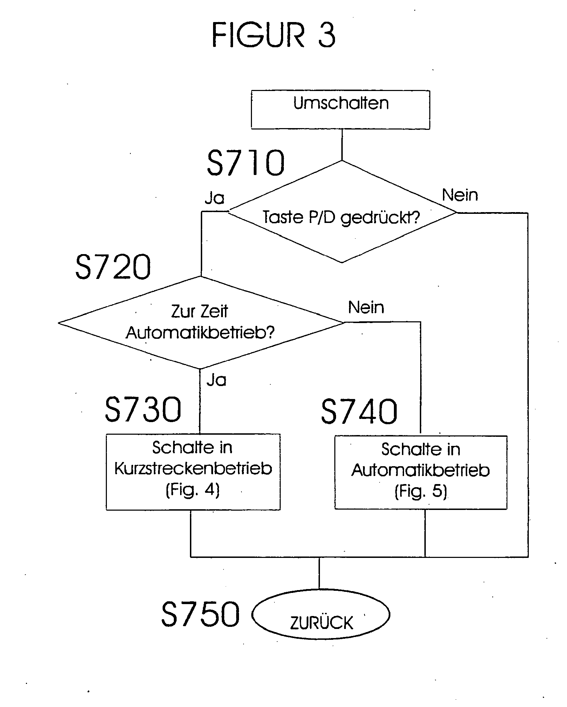

Nach dem erfolgreichen Starten des Motors geht die Steuerung im Schritt S700 zum in Figur 3 gezeigten Unterprogramm zum Umschalten zwischen Kurzstrecken- und Automatikbetrieb. Dabei prüft das Programm, ob der Fahrer eine Taste "P/D" ("Pflanzenöl/Diesel") der Steuerung gendrückt hat, um die Steuerung vom automatischen Umschalten auf Pflanzenöl abzuhalten, weil beispielsweise nur eine kurze Strecke zu fahren ist. Ist die Taste nicht gedrückt, geht das Programm zurück und fährt in der derzeitigen Betriebsart fort. Ist die Taste gedrückt, wird die Betriebsart in den Schritten S720 bis S740 in die jeweils andere Betriebsart umgeschaltet.

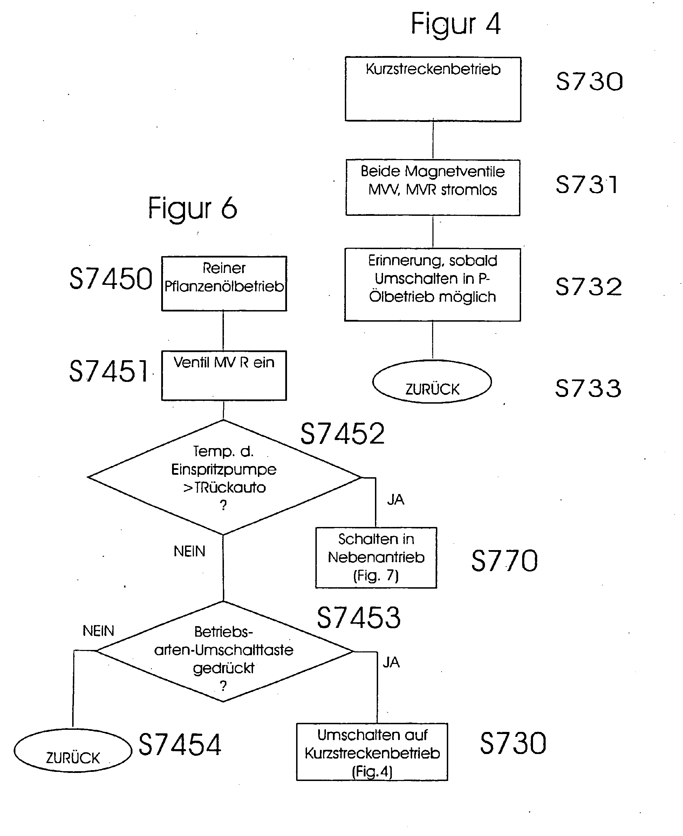

Ist im Schritt S710 beispielsweise die P/D-Taste gedrückt und wird im S720 festgestellt, dass die Steuerung im Automatikbetrieb ist, schaltet die Steuerung in den Kurzstreckenbetrieb. Dieses Umschalten wird anhand der Fig. 4 näher erläutert.

Im Schritt S731 der Fig. 4 werden beide Magnetventile MV V, MV R des Ventilsteuerblocks stromlos geschaltet. Wie vorstehend erläutert, wird der Motor daher ausschließlich mit Dieselkraftstoff versorgt. Im Schritt S732 wird geprüft, ob ein Umschalten auf Pflanzenölbetrieb möglich ist. Dazu wird (hier nicht gezeigt) der beim Automatikbetrieb erläuterte Programmschritt S742 durchgeführt. Wenn dieser Schritt ergibt, dass ein Betrieb mit Pflanzenöl möglich ist, wird im Schritt S732 jedoch nicht unmittelbar in den Pflanzenölbetrieb umgeschaltet, sondern lediglich der Fahrer beispielsweise optisch oder akustisch daran erinnert, dass ein solcher Betrieb möglich ist. Der Fahrer kann dann durch Drücken der "P/D"-Taste in den Automatikbetrieb umschalten, wie mit Bezug auf Fig. 3 beschrieben. Im Schritt S733 geht die Steuerung zurück zum "Umschalt"-Programm.

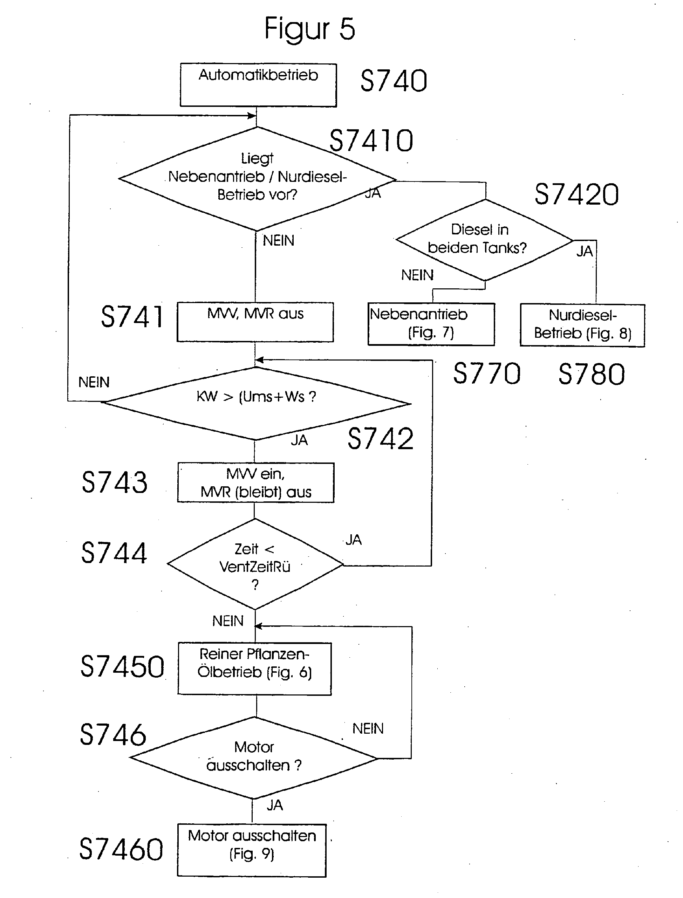

Wird bei gedrückter P/D-Taste im Schritt S720 festgestellt, dass die Steuerung im Kurzstreckenbetrieb ist, schaltet die Steuerung in den Automatikbetrieb. Dieses Umschalten wird anhand der Fig. 5 näher erläutert.

In Fig. 5 wird im Schritt S7410 zunächst geprüft, ob die Bedingungen für Nebenantrieb oder Nurdieselbetrieb vorliegen. Diese Bedingungen liegen vor, wenn entweder ein ungünstiges Drehzahl-/Drehmomentverhältnis vorliegt ("Nebenantrieb") oder beide Tanks mit Diesel gefüllt sind ("Nurdieselantrieb").

Es ist bei einem Dieselmotor zu bevorzugen, den Motor auch dann nicht im gesamten Leistungsbereich mit Pflanzenöl zu betreiben, wenn er warmgefahren ist, da sich die Verbrennungstemperaturen und damit die Verbrennungseigenschaften des Pflanzenöls ändern. Daher ist die Steuerung so angepasst, dass der Motor nur in einem für die Verbrennung von Pflanzenöl optimalen Bereich mit dem Öl betrieben wird, während er ansonsten mit Diesel betrieben wird. Beispielsweise liegt bei einem Motor zur Verbrennung von Diesel und Pflanzenöl dieser optimale Bereich der sauberen Verbrennung, besten Kompression und optimalen Haltbarkeit bei 40 bis 85 Prozent der Nennlast. Wird der Motor dagegen (im Stau oder ausschließlich zum Betrieb von Nebenaggregaten) mit minimaler Last oder (z.B. an Steigungen) mit hoher Last betrieben, ist es von Vorteil, in diesen Betriebzuständen ausschließlich mit Diesel zu fahren.

Daher prüft die Steuerung im Unterprogramm "Nebenantrieb" zunächst (Schritt S771), ob die Drehzahl oder das Drehmoment in dem vorstehend genannten für den Pflanzenöleinsatz ungünstigen Bereich liegen. Dies kann durch direkten Abgriff der Daten aus dem Motormanagement erfolgen. Falls nicht, geht die Steuerung zum Schritt S7410 (Fig.5) zurück. Liegen Drehzahl und/oder Drehmoment im genannten ungünstigen Bereich, werden im Schritt S772 beide Magnetventile ausgeschaltet. Dadurch wird der Motor mit Dieselkraftstoff versorgt. Ferner wird im Schritt S773 geprüft, ob ausreichend Pflanzenöl im Tank ist. Falls ja, wälzt die Pflanzenölpumpe das Öl um (Schritt S774), damit es warm bleibt bzw. wird, bis die ungünstigen Verbrennungsbedingungen nicht mehr vorliegen. Wenn nicht (Schritt S775), wird die Pflanzenölpumpe abgeschaltet. Anschließend kehrt das Programm zum Schritt S7410 zurück.

Ferner kann es sein, dass bei geringem Angebot an Pflanzenöl, beispielsweise bei Fahrten ins Ausland mit geringerer Dichte an Pflanzenöltankstellen oder schlicht anderen (steuerlichen) Gegebenheiten im Ausland nur mit Diesel gefahren werden soll. Für diesen Fall kann auch der (vergleichsweise große) für Pflanzenöl ausgelegte Tank mit Dieselkraftstoff befüllt werden. Diese Dieselbefüllung wird der Steuerung mitgeteilt, beispielsweise über einen Schalter am Pflanzenöltank.

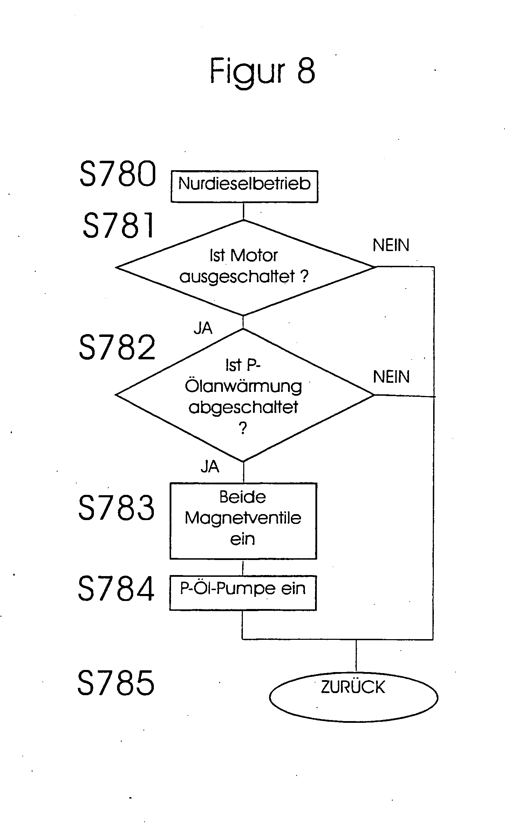

Falls die beiden Tanks mit Diesel gefüllt sind, geht die Steuerung über die Schritte S7410, S7420 zum nachstehend mit Bezug auf Fig. 8 beschriebenen Nurdieselbetrieb (Schritt S780). Dieser unterscheidet sich vom "Nebenantrieb" dadurch, dass der Dieselkraftstoff aus dem für Pflanzenöl vorgesehenen Tank zugeführt wird. Daher kann auf die Vorwärmung für den Pflanzenöltank verzichtet werden. Zunächst wrd geprüft, ob der Motor abgeschaltet ist.

Ist jedoch sowohl Pflanzenöl im Tank als auch eine für den Pflanzenölbetrieb geeignete Motorlast (Drehzahl/Drehmoment) vorhanden, geht die Steuerung zum Schritt S741 weiter, in dem zunächst beide Ventile MV V, MV R des Ventilsteuerblocks stromlos geschaltet sind, so dass der Motor mit Diesel läuft. Im Schritt S742 wird dann geprüft, ob die Kühlwassertemperatur KW eine Umschalttemperatur Ums, beispielsweise 60°C (zuzüglich eines eventuellen Sicherheitszuschlags Ws, beispielsweise 5°C) überschritten hat, mit anderen Worten, ob der Motor bereits warmgefahren ist. So lange die Kühlwassertemperatur zu niedrig ist, wird diese Abfrage wiederholt, d.h. das Programm geht zum Schritt S7410 zurück. Steigt die Kühlwassertemperatur über den genannten Wert, so wird im Schritt S743 das MV V eingeschaltet, d.h. Pflanzenöl wird in den Kreislauf der Einspritzpumpe zugeführt und verdrängt allmählich den zugeführten Dieselkraftstoff, wobei es weiter erwärmt wird. Im Schritt S744 prüft die Steuerung, ob eine vorab festgelegte Zeit VentzeitRü verstrichen ist, nach der nur Pflanzenöl im Einspritzsystem sein sollte. Wenn diese Zeit noch nicht verstrichen ist (JA im Schritt S744) geht das Programm zum Schritt S742 zurück, um zu prüfen, ob die Temperatur des Pflanzenöls ausreichend hoch bleibt. Bleibt die Temperatur hoch genug, bis VentzeitRü abgelaufen ist, ("NEIN" im Schritt S744) geht das Programm zum Schritt S7450 und somit zum Unterprogramm "Reiner Pflanzenölbetrieb" weiter, das in Fig. 6 erläutert ist.

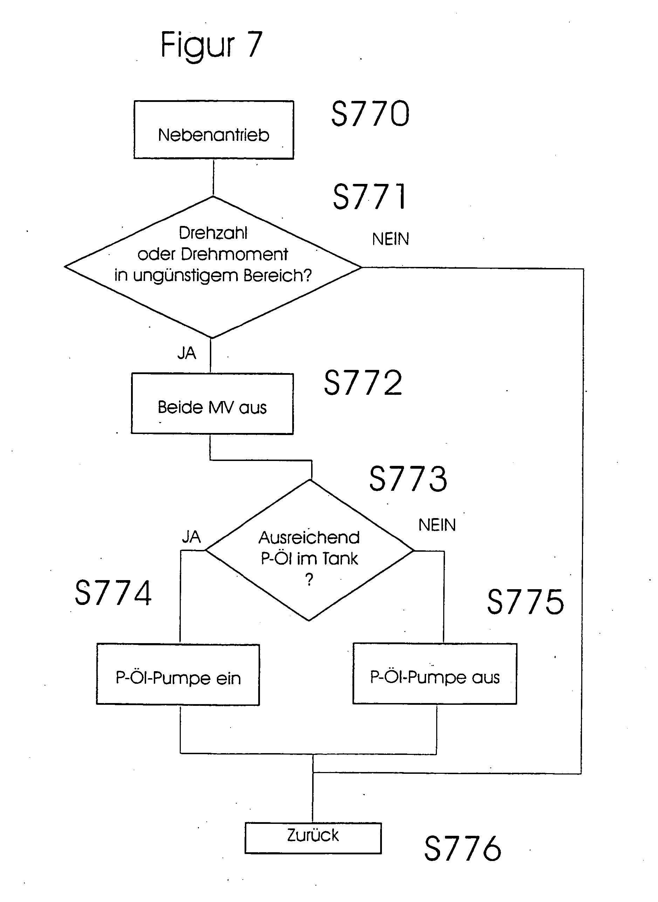

Im Schritt S7451 in Fig. 6 wird das MV R eingeschaltet, so dass nun Rapsöl im Zulauf der Einspritzpumpe zirkuliert. Im Schritt S7452 wird geprüft, ob die Temperatur an der Einspritzpumpe größer als eine Temperatur TRückauto zum automatischen Rückschalten in den Dieselbetrieb ist. Dies kann beispielsweise der Fall sein, wenn bei niedriger Last und hoher Wärmeabfuhr die Temperatur der Einspritzpumpe sinkt. Bei einem positiven Ergebnis dieser Abfrage wird in den in Fig. 7 beschriebenen Nebenantrieb (Schritt S770) geschaltet, d.h. der Motor wird wie bei geringer Auslastung ausschließlich mit Diesel betrieben. Bleibt die Temperatur der Einspritzpumpe hoch genug, wird im Schritt S7453 geprüft, ob die P/D-Umschalttaste gedrückt ist, d.h., ob auf Wunsch des Fahrers in den Dieselbetrieb umgeschaltet werden soll. Der Fahrer kann dies beispielsweise wünschen, um ein späteres Spülen zu vermeiden. Ist die Taste gedrückt, geht das Programm zum Schritt S730 (Fig. 4); ansonsten geht es im S7454 zum Automatikbetrieb nach Fig. 5 zurück.

In Fig. 5 prüft das Programm dann im Schritt S746, ob der Motor auf Wunsch des Fahrers auszuschalten ist. Wenn nicht, geht das Programm zum Schritt S7450 zurück und wiederholt den Ablauf für den reinen Pflanzenöl betrieb.

Soll der Motor ausgeschaltet werden, geht das Programm im Schritt S7460 der Fig. 5 zum in Fig. 9 gezeigten Unterprogramm. In diesem Programm wird zunächst im Schritt S7461 geprüft, ob der Motor bereits ausreichend lange (ca. 1 min) im Dieselbetrieb arbeitet. Wenn ja, wird der Motor abgestellt (Schritt S7466) und das Programm beendet.

Wenn der Motor noch nicht lange genug mit Diesel betrieben wird, werden zunächst (Schritte S7462, S7463) die Pflanzenöl-Umlaufpumpe und die Magnetventile abgeschaltet, so dass dem Einspritzsystem nur noch Dieselkraftstoff zugeführt wird. Anschließend wird das Einspritzsystem für ca. eine Minute mit Dieselkraftstoff gespült (Schritt S7464), so dass kein Pflanzenöl im Einspritzsystem mehr vorhanden ist, und anschließend der Motor abgestellt (Schritt S7464). Danach (Schritt S7467) wird geprüft, ob die "Kurzstop"-Taste gedrückt wurde, d.h. der Fahrer beabsichtigt, in Kürze mit warmem Motor weiterzufahren. Falls ja, startet der Motor im Automatikbetrieb neu, d.h., wenn die Voraussetzungen (Wärme, Belastung etc.) erfüllt sind, wird wieder in den reinen Pflanzenölbetrieb geschaltet. Wenn dagegen die "Kurzstop"-Taste nicht gedrückt wurde, wird das Programm beendet, d.h. der Motor startet beim nächsten Anfahren in dem herkömmlichen Steuermodus.

Weiterhin kann die Steuerung so ausgelegt sein, dass sie die Kraftstoffversorgung auf den vom Hersteller vorgesehenen Kraftstoff, beispielsweise Diesel, umschaltet, wenn die Motorlast für eine vorab bestimmte Zeit unterhalb einer vorab bestimmten Last bleibt (und/oder umgekehrt auch so, dass umgeschaltet wird, wenn die Motorlast für eine vorab bestimmte Zeit eine maximale Last überschreitet). Statt der Motorlast, die man aus Daten eines Motormanagements erhalten kann, ist es bei einer einfacheren Ausführungsform auch möglich, ausgehend von der Motordrehzahl umzuschalten. Ein Diesel fährt am besten mit einer konstanten Last von 40-85 %, dabei hält er mit Abstand am längsten, weist die besten Verbrennungswerte, eine saubere Kompression usw. auf. Bei einer geringen Motordrehzahl, wenn beispielsweise nur Nebenaggregate des Fahrzeugs wie Klimaanlagen, Silopumpen, Betonmischer, hydraulische Anlagen usw. betrieben werden, können sich verstärkt Ablagerungen durch unvollständige Verbrennung bilden. Dies kann vermieden oder zumindest stark reduziert werden, wenn unter solchen Umständen auf den vom Hersteller vorgesehenen Kraftstoff umgeschaltet wird. Fig. 7 zeigt ein Beispiel eines Unterprogramms zu diesem Zweck. Zunächst wird von der Steuerung entweder über zusätzliche Sensoren oder über direkten Zugriff auf Motormanagementdaten festgestellt, ob die Motorlast in einem ungünstigen Bereich liegt, d.h. Drehzahl und/oder Drehmoment außerhalb des o.g. Bereichs liegen (Schritt S771). Falls ja, werden beide Magnetventile abgeschaltet (Schritt S772). Anschließend wird geprüft, ob mindestens eine bestimmte Menge, beispielsweise rund 10 Prozent einer Tankfüllung an Pflanzenöl im Tank ist (Schritt S773). Falls ja, wird das Öl umgewälzt, um es mit der Abwärme des Motors aufzuwärmen (Schritt S774). Ist die Ölmenge jedoch gering, wird die Pumpe abgeschaltet, um nicht eventuelle Verunreinigungen am Boden des Tanks aufzuwirbeln und zu fördern (Schritt S775). Anschließend kehrt das Programm zum Hauptprogramm zurück.

Natürlich ist der vorstehend beschriebene Aufbau nicht auf das Umschalten von Raps- oder anderem Pflanzenöl auf Diesel beschränkt, sondern kann bei entsprechender Anpassung für alle denkbaren Kraftstoffpaarungen eines Zweistoffmotors verwendet werden. Beispiele für weitere Kraftstoffpaarungen sind Benzin / Ethanol, Benzin / Flüssiggas, Benzin / Flüssigwasserstoff oder Flüssigwasserstoff / Flüssiggas. Obwohl bei diesen Paarungen die Probleme unterschiedlich von den hier beschriebenen sind (so muss beispielsweise wahrscheinlich nicht bei jeder dieser Paarungen gespült werden), kann das gezeigte Konzept eines Ventilsteuerblocks, in den alle zum Umschalten nötigen Ventile integriert sind und der von einer Steuereinheit angesteuert wird, vorteilhaft für verschiedene Kraftstoffpaarungen verwendet werden.

## Patentansprüche

1. Kraftstoffversorgungsanlage zur Versorgung einer Brennkraftmaschine über verschiedene Kraftstoffleitungen mit wahlweise einem Kraftstoff aus einem ersten Tank oder einem Kraftstoff aus einem zweiten Tank,
wobei der für den zweiten Tank vorgesehene Kraftstoff erst bei höherer Temperatur Fließ- und Verbrennungseigenschaften aufweist, die mit denen des Kraftstoffs aus dem ersten Tank vergleichbar sind,
mit einer steuerbaren Ventilanordnung zur Umschaltung zwischen den Kraftstoffen aus dem ersten Tank und aus dem zweiten Tank,
einem Ventilsteuerblock, in den die Ventilanordnung integriert ist, und in den Kraftstoffzuleitungen von den Tanks münden und der die Kraftstoffe über weitere Leitungen an die Einspritzanlage verteilt, und
einer Steuervorrichtung zur Steuerung der Kraftstoffversorgungsanlage durch Steuern der Ventilanordnung abhängig von der Belastung des Motors,
**dadurch gekennzeichnet, dass**
die Steuervorrichtung so aufgebaut ist, dass sie zunächst ein in der Ventilanordnung angeordnetes Vorlaufventil (MV V) so schaltet dass es Kraftstoff aus dem zweiten Tank zum Motor durchlässt und Kraftstoff aus dem ersten Tank sperrt, sobald Fließ- und Verbrennungseigenschaften des Kraftstoffs aus dem zweiten Tank einen ersten vorab festgelegten Wert aufweisen oder überschreiten, und später das in der Ventilanordnung angeordnete Rücklauf ventil (MV R) des Ventilsteuerblocks so schaltet, dass es den vom Einspritzsystem nicht verbrauchten Kraftstoff aus dem zweiten Tank zurück in den zweiten Tank durchlässt, sobald die Fließ- und Verbrennungseigenschaften des Kraftstoffs aus dem zweiten Tank einen zweiten vorab festgelegten Wert aufweisen oder überschreiten.

2. Kraftstoffversorgungsanlage nach Anspruch 1, **dadurch gekennzeichnet, dass** sie das in der Ventilanordnung angeordnete Vorlaufventil (MV V) wieder so schaltet, dass es Kraftstoff aus dem ersten Tank zum Motor durchlässt und Kraftstoff aus dem zweiten Tank sperrt, sobald die Fließ- und Verbrennungseigenschaften des Kraftstoffs aus dem zweiten Tank den ersten vorab festgelegten Wert wieder unterschreiten.

3. Kraftstoffversorgungsanlage nach Anspruch 1 oder 2, **dadurch gekennzeichnet, dass** die Steuervorrichtung so aufgebaut ist, dass sie das Schalten des Rücklaufventils (MV R) so, dass es Kraftstoff aus dem zweiten Tank zum Motor durchlässt und Kraftstoff aus dem ersten Tank sperrt, rückgängig macht, sobald die Fließ- und Verbrennungseigenschaften des Kraftstoffs aus dem zweiten Tank den zweiten vorab festgelegten Wert wieder unterschreiten.

4. Kraftstoffversorgungsanlage nach einem der vorhergehenden Ansprüche, **dadurch gekennzeichnet, dass** der Ventilsteuerblock benachbart zu einem Wärmetauscher zum Aufheizen eines der Kraftstoffe angeordnet ist.

5. Kraftstoffversorgungsanlage nach einem der vorhergehenden Ansprüche, **gekennzeichnet durch** eine Steuereinrichtung, welche die Kraftstoffversorgung und den Ventilsteuerblock automatisch steuert.

6. Kraftstoffversorgungsanlage nach einem der vorhergehenden Ansprüche, **dadurch gekennzeichnet, dass** die Steuervorrichtung zumindest eine Ein-/Ausgabeeinheit mit einem Display aufweist, die in der Fahrgastzelle angeordnet ist.

7. Kraftstoffversorgungsanlage nach einem der vorhergehenden Ansprüche, **dadurch gekennzeichnet, dass** die Steuervorrichtung veranlasst, dass mindestens das Motor-Einspritzsystem vor einem endgültigen Abstellen der Brennkraftmaschine mit Kraftstoff aus dem ersten Tank gespült wird.

8. Kraftstoffversorgungsanlage nach Anspruch 7, **dadurch gekennzeichnet, dass** ein Spülen auch durch Drücken eines Wahlschalters in der Fahrerkabine auslösbar ist.

9. Kraftstoffversorgungsanlage nach Anspruch 7 oder 8, **dadurch gekennzeichnet, dass** das Spülen durch Drücken eines Wahlschalters in der Fahrerkabine unterdrückbar ist.

10. Kraftstoffversorgungsanlage nach Anspruch 9, **dadurch gekennzeichnet, dass** die Unterdrückung des Spülen automatisch aufgehoben und das Spülen durchgeführt wird, wenn ein Sensor meldet, dass die Temperatur eines der Kraftstoffe unter einen vorab festgelegten Wert gefallen ist.

11. Brennkraftmaschine mit einer Kraftstoffversorgungsanlage nach einem der vorhergehenden Ansprüche, **gekennzeichnet durch** mindestens einen Temperatursensor zum Feststellen der Temperatur mindestens eines Mediums, das eine Aussage über den Betriebszustand der Brennkraftmaschine zulässt

12. Steuervorrichtung zur Steuerung der Kraftstoffversorgungsanlage nach einem der Ansprüche 1 bis 10, **dadurch gekennzeichnet, dass** die Steuervorrichtung die Last des Motors abschätzt und veranlasst, dass die Kraftstoffversorgung den Motor mit einem Kraftstoff versorgt, der üblicherweise im ersten Tank eingefüllt ist wird, wenn die Last des Motors für eine vorab bestimmte Zeit unterhalb einer vorab bestimmten Last liegt.

13. Steuervorrichtung nach Anspruch 12, **dadurch gekennzeichnet, dass** sie die Last des Motors aufgrund von Motormanagementdaten ermittelt und die Kraftstoffversorgungsanlage aufgrund der ermittelten Werte umschaltet.

14. Steuervorrichtung nach einem der Ansprüche 12 oder 13, **dadurch gekennzeichnet, dass** sie die Kraftstoffversorgungsanlage umschalten kann, wenn nur Nebenaggregate laufen.

15. Steuervorrichtung nach einem der Ansprüche 12 bis 14, **dadurch gekennzeichnet, dass** sie durch Öffnen eines in der Ventilanordnung angeordneten Rücklaufventils (MV R) veranlasst, dass im Betrieb mit Kraftstoff aus dem zweiten Tank von der Einspritzpumpe nicht verbrauchter Kraftstoff in den entsprechenden Tank zurückgeführt wird.

16. Steuervorrichtung nach einem der Ansprüche 12 bis 15, **dadurch gekennzeichnet, dass** sie einem Bediener eine Möglichkeit bietet, manuell auf Kraftstoff aus dem ersten Tank umzuschalten bzw. die Umschaltung auf Kraftstoff aus dem zweiten Tank manuell zu verhindern.

17. Steuervorrichtung nach Anspruch 16, **gekennzeichnet durch** eine Vorrichtung, um den Bediener daran zu erinnern, dass mit Kraftstoff aus dem zweiten Tank gefahren werden könnte, wenn die dafür erforderlichen Bedingungen vorliegen, der Bediener die Umschaltung auf Kraftstoff aus dem zweiten Tank jedoch manuell verhindert hat.

## Claims

1. Fuel supply apparatus for supplying an internal-combustion engine via different fuel lines selectively with a fuel from a first tank or a fuel from a second tank,
the fuel which is provided for the second tank having only at a relatively high temperature flow and combustion properties which are comparable with those of the fuel from the first tank,
having a controllable valve arrangement for switching between the fuels from the first tank and from the second tank,
having a valve control block, in which the valve arrangement is integrated and in which fuel lines from the tanks open and which distributes the fuels via additional lines to the injection apparatus, and
having a control device for controlling the fuel supply apparatus by controlling the valve arrangement in a manner dependent on the load of the engine, **characterised in that** the control device is constructed in such a manner that it first switches an advance valve (MV V) arranged in the valve arrangement in such a manner that it allows fuel from the second tank to the engine and blocks fuel from the first tank as soon as flow and combustion properties of the fuel from the second tank have or exceed a first, previously fixed value and subsequently switches the return valve (MV R) of the valve control block arranged in the valve arrangement in such a manner that it allows the fuel from the second tank which is not used by the injection system back into the second tank as soon as the flow and combustion properties of the fuel from the second tank have or exceed a second, previously fixed value.

2. Fuel supply apparatus according to claim 1, **characterised in that** it again switches the advance valve (MV V) arranged in the valve arrangement in such a manner that it allows fuel from the first tank to the engine and blocks fuel from the second tank as soon as the flow and combustion properties of the fuel from the second tank again fall below the first, previously fixed value.

3. Fuel supply apparatus according to claim 1 or claim 2, **characterised in that** the control device is constructed in such a manner that it cancels the switching of the return valve (MV R) so that it allows fuel from the second tank to the engine and blocks fuel from the first tank as soon as the flow and combustion properties of the fuel from the second tank again fall below the second, previously fixed value.

4. Fuel supply apparatus according to any one of the preceding claims, **characterised in that** the valve control block is arranged adjacent to a heat exchanger for heating one of the fuels.

5. Fuel supply apparatus according to any one of the preceding claims, **characterised by** a control device which automatically controls the fuel supply and the valve control block.

6. Fuel supply apparatus according to any one of the preceding claims, **characterised in that** the control device has at least one input/output unit having a display which is arranged in the passenger compartment.

7. Fuel supply apparatus according to any one of the preceding claims, **characterised in that** the control device causes at least the engine injection system to be flushed with fuel from the first tank before the internal-combustion engine is definitively switched off.

8. Fuel supply apparatus according to claim 7, **characterised in that** flushing can also be initiated by pressing a selection switch in the driver's cab.

9. Fuel supply apparatus according to claim 7 or claim 8, **characterised in that** the flushing can be prevented by pressing a selection switch in the driver's cab.

10. Fuel supply apparatus according to claim 9, **characterised in that** the prevention of the flushing is automatically cancelled and the flushing is carried out if a sensor detects that the temperature of one of the fuels has fallen below a previously fixed value.

11. Internal-combustion engine having a fuel supply apparatus according to any one of the preceding claims, **characterised by** at least one temperature sensor for establishing the temperature of at least one medium which allows a statement concerning the operational state of the internal-combustion engine.

12. Control device for controlling the fuel supply apparatus according to any one of claims 1 to 10, **characterised in that** the control device estimates the load of the engine and causes the fuel supply to supply the engine with a fuel which is generally introduced in the first tank if the load of the engine is below a previously established load for a previously established period of time.

13. Control device according to claim 12, **characterised in that** it establishes the load of the engine on the basis of engine management data and switches the fuel supply apparatus on the basis of the values established.

14. Control device according to either claim 12 or claim 13, **characterised in that** it can switch the fuel supply apparatus if only auxiliary units are operating.

15. Control device according to any one of claims 12 to 14, **characterised in that** it causes, by a return valve (MV R) arranged in the valve arrangement being opened, fuel which is not used by the injection pump to be directed back into the corresponding tank during operation with fuel from the second tank.

16. Control device according to any one of claims 12 to 15, **characterised in that** it makes it possible for an operator to switch manually to fuel from the first tank or manually to prevent switching to fuel from the second tank.

17. Control device according to claim 16, **characterised by** a device to remind the operator that it would be possible to operate with fuel from the second tank if the necessary conditions are met but the operator has manually prevented switching to fuel from the second tank.

## Revendications

1. Système d'alimentation en carburant, pour l'alimentation d'un moteur à combustion interne par l'intermédiaire de différentes conduite à carburant, avec, au choix, un carburant provenant d'un premier réservoir ou d'un carburant provenant d'un deuxième réservoir,
le carburant prévu pour le deuxième réservoir présentant ensuite, à haute température, des propriétés d'écoulement et de combustion comparables à celles du carburant issu du premier réservoir,
avec un agencement de soupapes susceptible d'être commandé, pour la commutation entre les carburants issus du premier réservoir et du deuxième réservoir,
un bloc de commande de soupapes, dans lequel l'agencement de soupapes est intégré, et dans lequel débouchent des conduites d'alimentation en carburant provenant des réservoirs et qui répartit les carburant sur d'autres conduites, au système d'injection, et
un dispositif de commande, pour la commande du système d'alimentation en carburant, par commande de l'agencement de soupapes en fonction de la charge du moteur, **caractérisé en ce que**
le dispositif de commande est construit de manière que, d'abord, il commute une soupape aller (MV V) disposée dans l'agencement de soupapes, de manière qu'elle laisse passer vers le moteur du carburant provenant du deuxième réservoir et bloque le passage du carburant provenant du premier réservoir, dès que des propriétés d'écoulement et de combustion du carburant provenant du deuxième réservoir présentent ou excèdent une première valeur fixée préalablement et, ultérieurement, commute la soupape de retour (MV R) disposée dans l'agencement de soupapes, du bloc de commande de soupapes, de manière qu'elle laisse passer du carburant provenant du deuxième réservoir, non consommé par le système d'injection, pour le retourner dans le deuxième réservoir, dès que des propriétés d'écoulement et de combustion du carburant provenant du deuxième réservoir présentent ou excèdent une deuxième valeur fixée préalablement.

2. Système d'alimentation en carburant selon la revendication 1, **caractérisé en ce qu'**il commute de nouveau la soupape aller (MV V) disposée dans l'agencement de soupapes; de manière qu'elle laisse aller au moteur du carburant provenant du premier réservoir et bloque du carburant provenant du deuxième réservoir, dès que des propriétés d'écoulement et de combustion du carburant provenant du deuxième réservoir redescendent au-dessous de la première valeur fixée préalablement.

3. Système d'alimentation en carburant selon la revendication 1 ou 2, **caractérisé en ce que** le dispositif de commande est construit de manière qu'il inverse la commutation de la soupape de retour (MV R), de manière qu'elle laisse passer vers le moteur le carburant provenant du deuxième réservoir et bloque le passage du carburant provenant du premier réservoir, dès que des propriétés d'écoulement et de combustion du carburant provenant du deuxième réservoir redescendent au-dessous de la deuxième valeur fixée préalablement.

4. Système d'alimentation en carburant selon l'une des revendications précédentes, **caractérisé en ce que** le bloc de commande de soupapes est disposé au voisinage d'un échangeur de chaleur prévu pour le chauffage d'un des carburant.

5. Système d'alimentation en carburant selon l'une des revendications précédentes, **caractérisé par** un dispositif de commande, commandant de manière automatique l'alimentation en carburant et le bloc de commande de soupapes.

6. Système d'alimentation en carburant selon l'une des revendications précédentes, **caractérisé en ce que** le dispositif de commande présente au moins une unité d'introduction/édition munie d'un visuel d'affichage, disposée dans l'habitable.

7. Système d'alimentation en carburant selon l'une des revendications précédentes, **caractérisé en ce que** le dispositif de commande fait qu'au moins le système d'injection du moteur est rincé avec du carburant provenant du premier réservoir, avant une ultime mise à l'arrêt du moteur à combustion interne.

8. Système d'alimentation en carburant selon la revendication 7, **caractérisé en ce qu'**un rinçage peut également être déclenché par pressage d'un commutateur de sélection situé dans la cabine conducteur.

9. Système d'alimentation en carburant selon la revendication 7 ou 8, **caractérisé en ce que** le rinçage peut être stoppé par pressage d'un commutateur de sélection situé dans la cabine conducteur.

10. Système d'alimentation en carburant selon la revendication 9, **caractérisé en ce que** l'arrêt du rinçage est supprimé automatiquement et le rinçage est effectué lorsqu'un capteur informe de ce que la température d'un des carburant est tombée au-dessous d'une valeur fixée préalablement.

11. Moteur à combustion interne équipé d'un système d'alimentation en carburant selon l'une des revendications précédentes, **caractérisé par** au moins un capteur de température, pour fixer la température d'au moins un fluide, permettant de tirer des conclusions sur l'état de fonctionnement du moteur à combustion interne.

12. Dispositif de commande, pour commander le système d'alimentation en carburant selon l'une des revendications 1 à 10, **caractérisé** le dispositif de commande estime la charge du moteur et fait que l'alimentation en carburant alimente le moteur avec un carburant usuellement chargé dans un premier réservoir, lorsque la charge du moteur est inférieure, pour une durée déterminée préalablement, à une charge déterminée préalablement.

13. Dispositif de commande selon la revendication 12, **caractérisé en ce qu'**il détermine la charge du moteur d'après des données de gestion de moteur et commute le système d'alimentation en carburant d'après les valeurs déterminées.

14. Dispositif de commande selon l'une des revendications 12 ou 13, **caractérisé en ce qu'**il peut commuter le système d'alimentation en carburant, lorsque ne fonctionnent que des agrégats annexes.

15. Dispositif de commande selon l'une des revendications 12 à 14, **caractérisé en ce que**, par ouverture d'une soupape de retour (MV R) disposée dans l'agencement à soupapes, il fait que, en fonctionnement avec du carburant provenant du deuxième réservoir, du carburant non consommé par la pompe d'injection soit retourné dans le réservoir correspondant.

16. Dispositif de commande selon l'une des revendications 12 à 15, **caractérisé en ce qu'**il offre à un utilisateur la possibilité de commuter manuellement pour du carburant provenant du premier réservoir, ou d'empêcher manuellement la commutation pour du carburant provenant du deuxième réservoir.

17. Dispositif de commande selon la revendication 16, **caractérisé par** un dispositif pour rappeler à l'utilisateur que l'on pourrait fonctionner avec du carburant provenant du deuxième réservoir, lorsque les conditions nécessaires pour cela sont présentes, mais que, cependant, l'utilisateur a empêché manuellement la commutation pour du carburant provenant du deuxième réservoir.
